# EUROPEAN PATENT APPLICATION

(11) **EP 4 477 924 A1**
(43) Date of publication of application: **18.12.2024**
(21) Application number: 23179589.9
(22) Date of filing: 15.06.2023
(51) Int. Cl.: F16K 11/16

(54) **MULTIPORT VALVE ASSEMBLY AND USE OF SUCH VALVE ASSEMBLY**

(71) Applicant: ESBE AB, 333 75 Reftele (SE)
(72) Inventor: BENGTSSON, Dan, 333 75 Reftele (SE)
(74) Representative: AWA Sweden AB

(57) **Abstract**

A valve assembly (1000) is provided. The valve assembly (1000) comprises a valve housing (100). The valve housing (100) comprises a first fluid opening (20), a second fluid opening (40), a third fluid opening (60), a valve bore (80) having an axial extension (A1), and an intermediate portion (110) axially located between the second (40) and the third (60) fluid opening. The valve assembly (1000) further comprises a plunger (200) disposed and axially movable within the valve bore (80), wherein the plunger (200) comprises an upper plunger member (210) and a lower plunger member (220) axially movable independently of each other on a respective axial side of the intermediate portion (110), wherein the upper (210) and lower (220) plunger members, while contacting the intermediate portion (110), provide for simultaneous prevention of a fluid to flow in a first flow path and in a second flow path, the first flow path being a flow path between the first fluid opening (20) and the second fluid opening (40), and the second flow path being a flow path between the first fluid opening (20) and the third fluid opening (60).

## Description

### TECHNICAL FIELD

The present disclosure relates to multi-port valve assemblies and use of such valve assemblies.

### BACKGROUND

Systems arranged to provide heated or cooled fluid from a source being distributed to a user side via two partial circuits, e.g., heat exchangers, are common in the art. To control supply to the user side in such systems, two control valves are conventionally used, where respective partial circuit is associated with a single such control valve. These control valves may be of two-way type for controlling the flow through one partial circuit and thereby to control the heating or cooling supply to the user side. Should one of the valves be closed in systems with two sources, heating or cooling is prevented to be delivered from one of the sources. Should one of the valves be closed in systems with two user circuits, heating or cooling may be prevented to be delivered to one of the two user circuits. In systems having two user circuits where the available heat from the source is often scarce, and the supply to a respective user side is limited, a so-called priority function may be utilized, hence allowing a single valve to be open at a time. In systems with two sources, one source may be dedicated for cooling whereas the remaining source may be dedicated for heating, thus implying that only one of these sources may be active at a time. Based on at least the above, there is a need for a valve assembly that simplifies heat priority or switching between heating or cooling in terms of number of components, installation, and maintenance, both in systems as exemplified above, and other systems.

### SUMMARY

It is a general object of the inventive concept to mitigate, alleviate or eliminate one or more of the above-identified deficiencies in the art and disadvantages singly or in any combination and at least partly solve the above-mentioned problems.

An object of the present inventive concept is to provide a valve assembly having a function of a plurality of types of valve assemblies.

Another object is to provide a valve assembly that comprises fewer part.

Another object is to provide a valve assembly that is simpler to manufacture.

Another object is to provide a valve assembly having relatively compact dimensions.

Another object is to provide a valve assembly being convenient in terms of maintenance/service.

According to a first aspect of the inventive concept, there is provided valve assembly comprising a valve housing. The valve housing comprises a first fluid opening, a second fluid opening, a third fluid opening, a valve bore having an axial extension, and an intermediate portion axially located between the second and the third fluid opening. The valve assembly further comprises a plunger disposed and axially movable within the valve bore, wherein the plunger comprises an upper plunger member and a lower plunger member axially movable independently of each other on a respective axial side of the intermediate portion, wherein the upper and lower plunger members, while contacting the intermediate portion, provide for simultaneous prevention of a fluid to flow in a first flow path and in a second flow path, the first flow path being a flow path between the first fluid opening and the second fluid opening, and the second flow path being a flow path between the first fluid opening and the third fluid opening.

The present inventive concept provides an overall improved valve assembly having a fewer number of parts. Hence, manufacturing and assembling of the valve assembly is facilitated.
Further, the valve assembly may function as a diverting valve, hence providing for a fluid to flow between two fluid openings at a time, while the remaining fluid opening is closed and thereby prevents any fluid flow to flow therebetween. This is in contrast to commonly occurring diverting valves (capable of diverting an incoming fluid to flow towards and out from any remaining valve opening) in which opening of a specific flow path affects a flow path in the remaining flow path. That is, if a first flow path of such a commonly occurring diverting valve is open to, e.g., a 70% extent, the second flow path is open to a 30% extent. Closing the first flow path in the same commonly occurring diverting valve to be open to a 60% extent thereby opens up the second flow path to a 40% extent, etc.

Respective flow path for the present valve assembly may be controlled separately, allowing control of a fluid flow in one of the flow paths while the remaining fluid opening is closed. Hence, the present valve assembly may function as two conventional two-way valves for, e.g., modulating water flow in systems having separate flow paths. This may facilitate maintenance and installation of the valve assembly and/or other components in the system of concern. Thus, installation costs may be reduced. The valve assembly thereby facilitates a simplified approach in terms of heat priority in, e.g., a heating or cooling system having two heat exchangers, since the number of components may be reduced by one or two valve assemblies (depending on whether heat priority is done electronically or by means of a diverting valve). Other systems in which the valve assembly may be installed is a heating system, a cooling system, a potable water system, a combined heating or cooling system, in systems for heating, cooling and/or potable water, etc. The present valve assembly may be a three-way valve being connected in a piping system accordingly. The valve assembly may combine the functionality of two control valves and one diverting valve, which thereby may reduce the number of components in, e.g., a heating or cooling system, thereby reducing costs, simplifying maintenance, etc. Although the present disclosure provides examples of the valve assembly being a three-way valve, the skilled person appreciates that the valve assembly may have more than three fluid openings. By way of example, should the valve assembly have precisely four fluid openings, an incoming fluid flow may flow from the first fluid opening to one or more of the second, third, and a fourth fluid opening. In such a four-way valve, there may be a plurality of flow path options. Control of a specific flow path in connection thereto may be as set out above and below. Further, reference to a specific flow path being open for a fluid flow may thereby imply that one or more of the remaining flow paths are blocked.

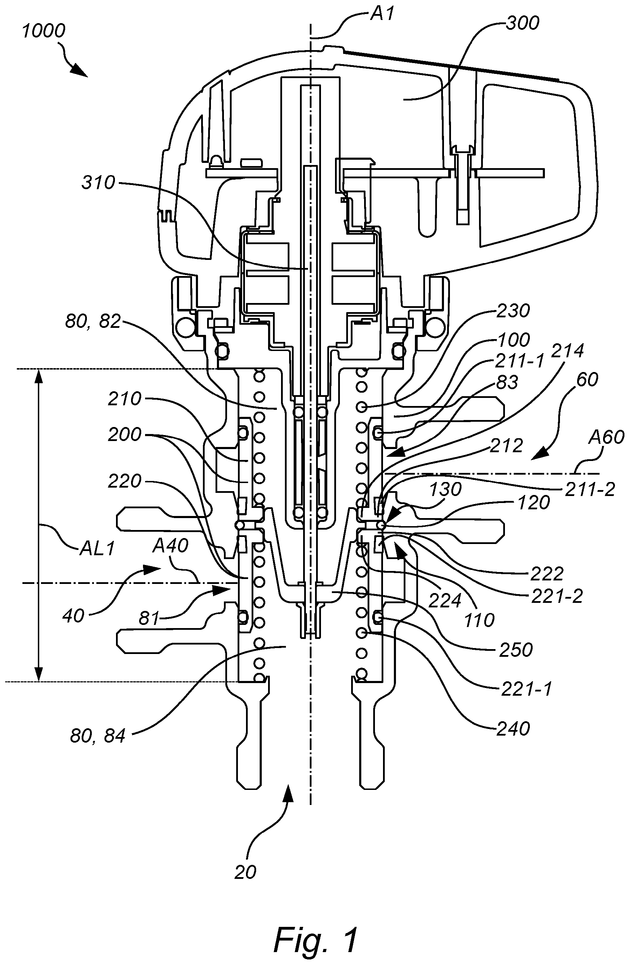

Spatial terms such as "upper" and "lower", as used herein, are to be understood in the orientation depicted in the appended drawings (e.g., Fig. 1), i.e., not bound by reference to the everyday terminology of "vertical" or "elevated". However, the terms "vertical" or "elevated" may also occasionally be used herein without being interpreted narrowly. This to not obscuring a clear understanding of the terminology used herein. The skilled person readily appreciates that the above-mentioned terms does not affect the scope of the claims should the valve assembly may be viewed and/or installed "upside-down", or the like. Hence, generally, the term "upper" refers to a specific side of the intermediate portion of the valve bore. The term "lower" thus refers to a side opposite to said specific side of the intermediate portion of the valve bore.

Correspondingly, relative spatial terms such as, "top", "bottom", "above", "under", "underneath", "below", "transversally", "longitudinally", etc., are to be understood in relation to the above-mentioned terms, as seen along the vertical/normal direction.

Reference to a/the "plunger" may concern either or both of the upper and lower plunger members throughout.

The valve assembly may further comprise an upper biasing member for biasing the upper plunger member towards the intermediate portion, and a lower biasing member for biasing the lower plunger member towards the intermediate portion.

Hence, the upper and the lower plunger member are biased towards a substantially centered region of the valve bore. In events of a power failure or the like, the valve assembly will thus be positioned in a fluid flow preventing state, thereby facilitating safety, liquid leaks, etc.

The upper biasing member may be an upper spring, and the lower biasing member may be a lower spring.

Using springs as biasing members is particularly suitable in harsh environments, such as in the valve bore being a substantially constantly wet or moisture environment. Respective spring of the upper and lower springs may be a pressure spring, or any other adequate spring.

The valve assembly may further comprise a plunger movement preventing member arranged at the intermediate portion for preventing at least a portion of the upper plunger member to move below the plunger movement preventing member, and for preventing at least a portion of the lower plunger member to move above the plunger movement preventing member.

The plunger movement preventing member may be configured to prevent at least a portion of the upper plunger member to move below the plunger movement preventing member, and to prevent at least a portion of the lower plunger member to move above the plunger movement preventing member. Hence, the upper and lower plunger members may, respectively, partly or entirely (preferably entirely) be spatially restricted to a respective side of the plunger movement preventing member. This facilitates reliability of a liquid flow though the valve assembly.

The valve housing may comprise a protrusion at the intermediate portion, the protrusion protruding in a radial extension into the valve bore. In other words, the plunger movement preventing member may be an integral part of the valve housing.

Hence, the protrusion may have the function of the plunger movement preventing member per the above. The protrusion may thus be an integral part of the valve housing and may thus facilitate the strength of the valve assembly. The protrusion may be of any form, as appreciated by the skilled person. Preferably, the protrusion is a circumferentially arranged protrusion, thus extending along a circumferential edge (substantially perpendicular to the axial extension of the valve bore) at the intermediate portion of the valve bore.

The plunger movement preventing member may have an open circumferential geometry temporarily attachable to a complementary indentation of the intermediate portion such that the plunger movement preventing member is radially biased therein.

Apart from what is mentioned above, the upper and the lower plunger member may be biased towards a substantially centered region of the valve bore. In events of a power failure or the like, the valve assembly may thus be positioned in a fluid flow preventing state, thereby facilitating safety, preventing liquid leaks, etc. This option may be structurally similar to the previously described protrusion.

The upper and lower plunger members may be biased towards the plunger movement preventing member while contacting thereto.

This may further facilitate the upper and the lower plunger member to be biased towards a substantially centered region of the valve bore.

The valve assembly may further comprise a plunger member mover arranged for axially moving the upper plunger member and the lower plunger member.

The plunger member mover may comprise a single moving part being selectively in contact with either or both plunger members, hence facilitating a particularly convenient approach for moving respective plunger member within the valve bore.

The upper plunger member and the lower plunger member may, on axially opposing sides, have open ends.

This facilitates reliability of the liquid flow through the valve assembly. Further, a plunger (member) having open ends may be structurally strong, hence facilitating manufacturing using less material. This may provide for a structurally smaller plunger, at least with regard to an axial extension of the valve bore and the plunger. For the sake of clarity, the term "open end" is to be understood as at least a portion of the end in question is open for a fluid/liquid to pass therethrough.

The upper plunger member and the lower plunger member may, respectively, comprise a sleeve being unobstructed.

Hence, fluid that flows through the valve assembly may exclusively flow through the upper or the lower plunger member, depending on which fluid opening being open.

A first merge between the second fluid opening and the valve bore and a second merge between the third fluid opening and the valve bore may be axially separated along the axial extension of the valve bore such that the first merge and the second merge are located on axially opposing sides of the intermediate portion of the valve housing.

The term "merge" is herein to be understood being a region through which fluid/liquid may flow, i.e., an opening between the valve bore and a fluid opening. Having axially separated merges may facilitate manufacturing.

The first fluid opening may be a fluid inlet, the second fluid opening may be a first fluid outlet, and the third fluid opening may be a second fluid outlet.

Hence, the valve assembly may function as a diverter valve for diverting an incoming fluid (entering the valve bore via the first fluid opening) to either the second fluid opening (the first fluid outlet) or to the third fluid opening (the second fluid outlet).

The first fluid opening may be a fluid outlet, the second fluid opening may be a first fluid inlet, and the third fluid opening may be a second fluid inlet.

Hence, the valve assembly may function as a mixing valve for mixing an incoming fluid from either the second fluid opening (the first fluid inlet) or from the third fluid opening (the second fluid inlet) to the first fluid opening (the fluid outlet). It is to be understood, however, that the valve assembly allows for a single flow path at a time, i.e., a fluid flow between one inlet and one outlet, regardless of how the valve assembly is installed in a circuit.

The valve assembly may further comprise an electronically controlled linear actuator, and a translator extending along the axial extension of the valve bore, wherein the translator is operably connected to the electronically controlled linear actuator and the plunger member mover such that an axial movement of the translator generates a movement of the upper plunger member or the lower plunger member.

Electronic control of the fluid flow may provide for a precise and convenient control of the fluid flowing through the valve assembly.

One or more parts of the valve assembly may be manufactured by one or more materials/compounds selected from the group consisting of brass, steel, bronze, plastic and/or fiber composite, and iron.

Hence, the material/compound constituting the one or more parts of the valve assembly may be durable. This may provide for a valve assembly capable of withstanding significant fluid pressures, and to work for a significant amount of time in harsh environment.

According to a second aspect, the inventive concept refers to use of a valve assembly, according to the first aspect, in a heating or cooling system and/or a tap water system.

The above-mentioned features in connection with the first aspect, when applicable, apply to this second aspect as well. In order to avoid undue repetition, reference is therefore made to the above.

A further scope of applicability of the present inventive concept will become apparent from the detailed description given below. However, it should be understood that the detailed description and specific examples, while indicating preferred embodiments of the invention, are given by way of illustration only, since various changes and modifications within the scope of the inventive concept will become apparent to those skilled in the art from this detailed description.

Hence, it is to be understood that this inventive concept is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### BRIEF DESCRIPTION OF THE DRAWINGS

The above and other aspects of the present invention will now be described in more detail, with reference to appended figures. The figures should not be considered limiting; instead, they are used for explaining and understanding. Like reference numerals refer to like elements throughout.
Fig. 1 shows a cross-section view of a valve assembly.
Fig. 2 shows a cross-section view of a valve assembly, where a lower plunger member is situated in a bottom plunger position.
Fig. 3 shows a cross-section view of a valve assembly, where an upper plunger member is situated in a top plunger position.
Fig. 4A shows a perspective view of a lower plunger member, an upper plunger member, and a plunger member mover isolated from remaining parts of a valve assembly.
Fig. 4B shows a top view of the parts shown in Fig. 4A.

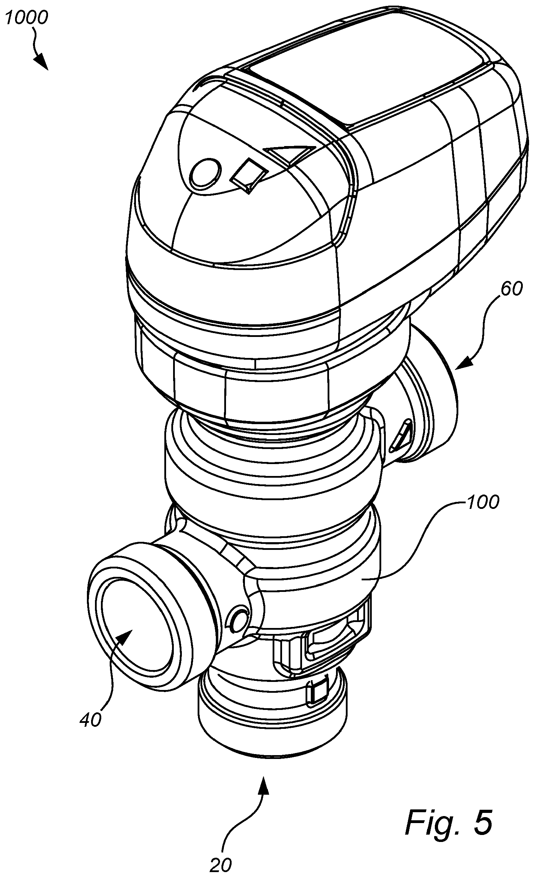

Fig. 5 shows a perspective view of a valve assembly.
Figs 6A-B show a first example use case of the valve assembly.
Figs 7A-B show a second example use case of the valve assembly.

### DETAILED DESCRIPTION

The present inventive concept will now be described more fully hereinafter with reference to the accompanying drawings, in which currently preferred embodiments of the inventive concept are shown. This inventive concept may, however, be embodied in many different forms and should not be construed as limited to the embodiments set forth herein; rather, these embodiments are provided for thoroughness and completeness, and to fully convey the scope of the inventive concept to the skilled person.

Fig. 1 shows a cross-section of a valve assembly 1000. The valve assembly 1000 comprises a valve housing 100. The valve housing 100 comprises a first fluid opening 20, a second fluid opening 40, and a third fluid opening 60. The first fluid opening 20 may be viewed as a fluid inlet 20. Such a fluid inlet 20 is configured to allow a fluid to flow from an exterior of the valve housing 100 to an interior of the valve housing 100, via, e.g., a connected fluid pipe (not shown). The remaining fluid openings 40, 60, i.e., the second 40 and the third 60 fluid opening, may be viewed as fluid outlets 40, 60. Hence, a fluid may flow out from the interior of the valve housing 100 through either of the second 40 and the third 60 fluid openings. It should be appreciated, however, that either or both of the second 40 and third 60 fluid openings may act as a fluid inlet, depending on a present use case. As set out above, it is appreciated that the valve assembly, in an alternative embodiment (not shown), may comprise more than three fluid openings without departing from the scope of the claims.

The valve housing 100 further comprises a valve bore 80 having an axial extension A1. Reference to an axial movement implies a movement being substantially parallel to the axial extension A1 of the valve bore 80 if not explicitly stated otherwise. The valve bore 80 may have a cylindrical geometry. Preferably, the valve bore 80 has a circularly cylindrical geometry. A circularly cylindrical geometry may facilitate manufacturing of the valve assembly 1000. The fluid discussed throughout this text may be a liquid suitable for use in a piping of a heating or cooling system. Such a liquid may be water, or any adequate equivalent.

The valve housing 100 further comprises an intermediate portion 110 axially located between the second 40 and the third 60 fluid opening. The intermediate portion 110 may be a physical and/or a geometrical region in vicinity of an axially located center region of the valve bore 80. The intermediate portion may extend, along the axial extension A1, less than 30%, preferably 2-15%, of an axial length AL1 of the valve bore.

The valve assembly 1000 further comprises a plunger 200. The plunger 200 is disposed within the valve bore 80. The plunger 200 is axially movable within the valve bore 80. "Axially movable" refers to a movement along the axial extension A1 of the valve bore 80. It is appreciated that the plunger 200 may, at least to a certain extent, be rotatable about the axial extension, i.e., in a plane perpendicular to the axial extension, in the event the valve bore 80 and the plunger have an essentially circular geometry. However, it may be preferable throughout that the plunger 200 is exclusively movable along the axial extension A1 of the valve bore 80. Hence, the plunger 200 may be arranged to be prevented to rotate about the axial extension A1 while being disposed within the valve bore 80.

The plunger 200 comprises an upper plunger member 210 and a lower plunger member 220. The upper plunger member 210 and the lower plunger member 220 are axially movable independently of each other on a respective axial side of the intermediate portion 110. Hence, the upper plunger member 210 may move along the axial extension A1 above the intermediate portion 110, and the lower plunger member 220 may move along the axial extension A1 below the intermediate portion 110; this independently of each other. Again, it is to be understood that the upper 210 and lower 220 plunger members may, at least to a certain extent, rotate about the axial extension A1 of the valve bore 80 independently of each other.

The upper 210 and lower 220 plunger members, while contacting the intermediate portion 110, provide for simultaneous prevention of a fluid to flow in a first flow path FP1 and in a second flow path FP2.

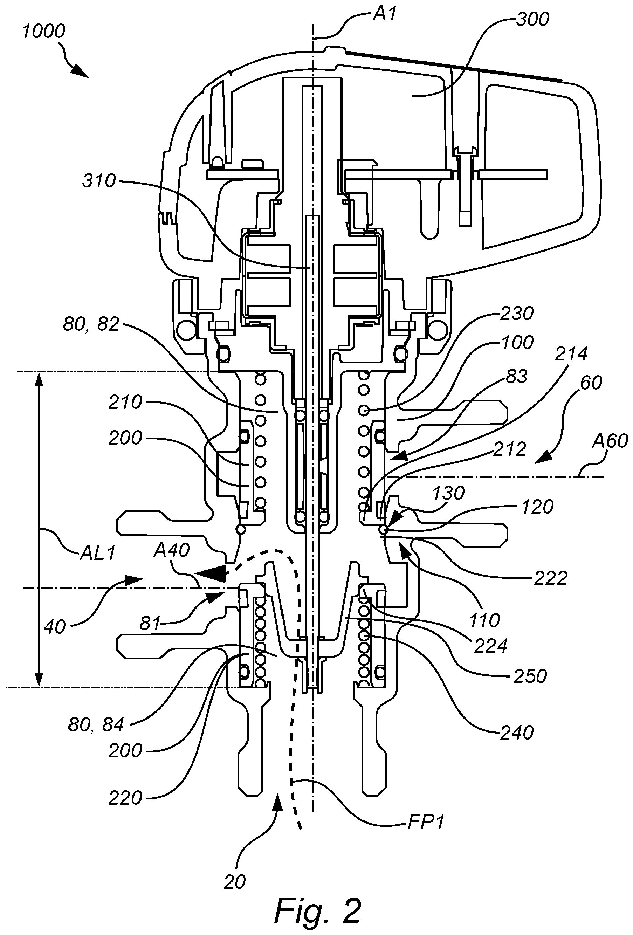

The first flow path is a flow path between the first fluid opening 20 and the second fluid opening 40. This flow path is facilitated while the lower plunger member 220 is positioned in vicinity of a bottom of the valve bore. This situation is depicted in Fig. 2, showing a position of the lower plunger member 220 being in its bottommost position of the valve bore 80, thus providing for the first flow path FP1 being fully open.

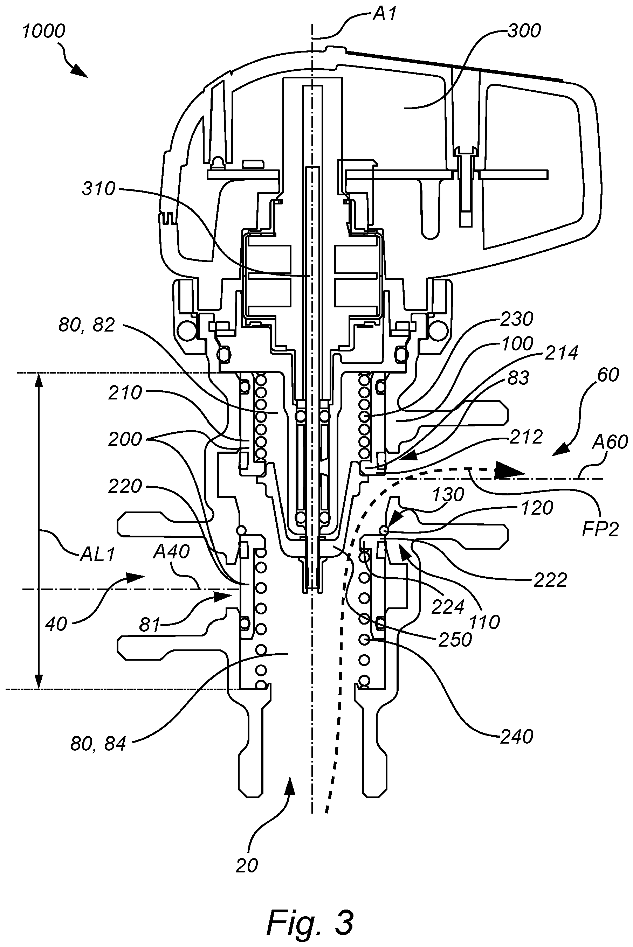

The second flow path FP2 is a flow path between the first fluid opening 20 and the third fluid opening 60. This flow path is facilitated while the upper plunger member 210 is positioned towards an upper region 82 of the valve bore. This situation is depicted in Fig. 3, showing a position of the upper plunger member 210 being in its topmost position of the valve bore 80, thus providing for the second flow path FP2 to be fully open.

The valve assembly 1000 may thus provide for a fluid to flow between two fluid openings at a time, while the remaining fluid opening is closed and thereby prevents any fluid flow. A fluid flow is exclusively allowed in the first flow path FP1 or in the second flow path FP2, and thus not both simultaneously. Further, respective flow path FP1, FP2 may be controlled separately, allowing a volumetric fluid flow control in a specific flow path FP1 (FP2) while the remaining flow path FP2(FP1) is blocked/closed. The degree of opening of a specific flow path depends on the axial position of the plunger upper/lower plunger members 210, 220, given a specific set of system conditions such as fluid flow, temperature, etc. The upper plunger member 210 may assume any axial position in the upper region 82 of the valve bore 80. The lower plunger member 220 may assume any axial position in a lower region 84 of the valve bore 80. A fluid flow in a specific flow path FP1 (FP2) may thereby be substantially continuously controlled while the remaining flow path FP2(FP1) is essentially closed. A certain discreteness in the control of the fluid may however be present, as appreciated by the skilled person. In a practical application, the plunger members 210, 220 may by way of example respectively assume 10-1000 different axial positions within the valve bore 80.

The term "contacting" as used above and below, may herein be understood as, upon referring to the upper plunger member 210, a bottom portion 212 of the upper plunger member being in direct or indirect contact with the intermediate portion 110 such that the second flow path FP2 is closed for any liquid flow. That is, said direct or indirect contact (i.e., sealing) and the simultaneous closure of the third fluid opening 60 prevents fluid to flow between the first fluid opening 20 and the third fluid opening 60, as readily appreciated by the skilled person. A similar reasoning applies for the lower plunger member 220, in that "contacting" refers to a top portion 222 of the lower plunger 220 being in direct or indirect contact with the intermediate portion 110 such that the first flow path FP1 is closed for any liquid flow. Accordingly, said direct or indirect contact (i.e., sealing) and the simultaneous closure of the second fluid opening 40 prevents fluid to flow between the first fluid opening 20 and the second fluid opening 40. Hence, when both the upper 210 and the lower 220 plunger members contact/abut the intermediate portion 110, the valve assembly 1000 may be viewed as being in a closed state.

The valve assembly 1000 may further comprise an upper biasing member 230 for biasing the upper plunger member 210 towards the intermediate portion 110. The upper biasing member 230 may be an upper spring 230, depicted in Fig. 1 as two columns of vertically arranged circles due to the cross-sectional depiction. Thus, the upper biasing member 230 preferably is a pressure spring 230.

The valve assembly 1000 may further comprise a lower biasing member 240 for biasing the lower plunger member 220 towards the intermediate portion 110. The lower biasing member 240 may be a lower spring 240, depicted in Fig. 1 as two columns of vertically arranged circles due to the cross-sectional depiction. Thus, also the lower biasing member 240 preferably is a pressure spring 240. It is to be understood that the inventive concept may alternatively be realized by using a tension spring disposed in the valve bore 80. On such occasions, the upper plunger member may be biased upwards along the axial extension A1 of the valve bore 80, and would thus benefit from a separate plunger member mover configured to move the upper plunger member. Hence, also the lower plunger member 220 may be biased downwards by another tension spring disposed within the valve bore 80, movable by another plunger member mover. A plunger member mover 250 for the herein preferable case of pressure springs 230, 240 is described below.

Alternatively, respective plunger member 210, 220 may be moved by being attached to a movable translator, i.e., without a plunger member mover. In such situations the upper plunger member 210 may be attached to a first axially movable translator, and the lower plunger member 220 may be attached to a second axially movable translator, wherein the first and the second axially movable translator are independently movable along the axial extension A1.

The valve assembly 1000 may further comprise a plunger movement preventing member 120 arranged at the intermediate portion 110 for preventing at least a portion of the upper plunger member 210 to move below the plunger movement preventing member 120, and/or for preventing at least a portion of the lower plunger member 220 to move above the plunger movement preventing member 120.

The plunger movement preventing member 120 may have an open circumferential geometry. The plunger movement preventing member 120 may be temporarily attachable to a complementary indentation 130 of the intermediate portion 110 such that the plunger movement preventing member 120 is radially biased therein. Thus, as appreciated, the plunger movement preventing member 120 may be a separate part being temporarily or permanently attachable at the intermediate portion 110 of the valve housing 100. In other words, the plunger movement preventing member 120 may be an open ring having, in its relaxed state, an outer diameter larger than a diameter of the complementary indentation 130 such that, when installed, the plunger movement preventing member 120 becomes outwardly radially biased in the complementary indentation 130. The plunger movement preventing member 120 may thus, without further fastening means, suffice to fulfil its purpose per the above. However, alternatively, the plunger movement preventing member 120 may be fastened by any adequate fastening means in the intermediate portion 110 with remained function. By way of example, the plunger movement preventing member 120 may have the form of one or more protruding portions protruding into the valve bore 80 axially situated in vicinity of the intermediate portion 110. Alternatively, or additionally, the plunger movement preventing member 120 may be an integral part of the valve housing. That is, the valve housing 100 may alternatively or additionally comprise a protrusion (not shown) at the intermediate portion 110, the protrusion protruding in a radial extension into the valve bore. The radial extension is herein referred to being transverse to the axial extension A1 and may thus be any kind of protrusion extending from an interior wall of the valve bore 80 into the valve bore 80. Hence, this integral part option may serve the same purpose and have a similar structure as the above-mentioned options of the plunger movement preventing member 120. It is further to be understood, that the plunger movement preventing member (or the protrusion) may have any shape or radial extension to adequately prevent undesirable plunger member movements. It is further possible that said protrusion may include two (or more) protrusions separated along the axial extension A1.

The upper 210 and lower 220 plunger members may be biased towards the plunger movement preventing member 120 while abutting thereto. This is clearly understood from the above-described pressure spring example. As previously mentioned, the term "abutting" as used herein, may be understood as, upon referring to the upper plunger member 210, a bottom portion 212 of the upper plunger member 210 being in direct or indirect contact with the plunger movement preventing member 120. Preferably, but hence not necessarily, the upper 210 and lower 220 plunger members are biased towards the plunger movement preventing member 120 while being in direct contact thereto. It is appreciated that the valve assembly 1000 may function even if the plunger movement preventing member 120 is absent. By way of example, this may be the case when the upper 230 and lower 240 biasing members are in a substantially relaxed state while the upper and lower plunger members abut the intermediate portion 110.

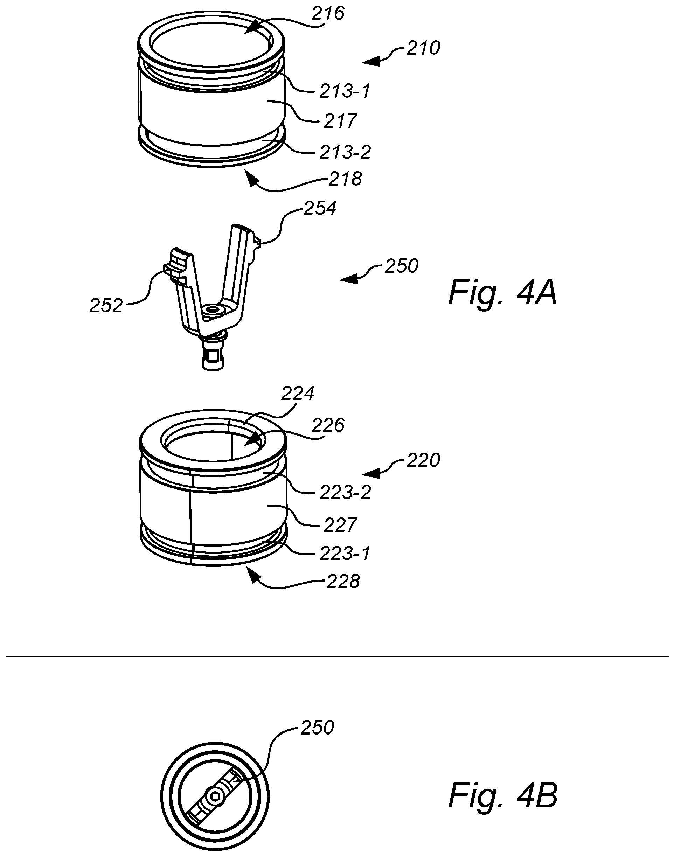

The valve assembly 1000 may further comprise a plunger member mover 250 arranged for axially moving the upper plunger member and the lower plunger member. An example plunger member mover 250 is shown in isolation in Fig. 4A. The plunger member mover 250 may be attached to a translator 310 (further discussed below). The plunger member mover 250 may comprise a first 252 and a second 254 protruding portion. The first 252 and the second 254 protruding portion may be oppositely arranged, e.g., pointing away from each other. Hence, when the plunger member mover 250 is disposed within in the valve bore 80 the protruding portions 252, 254 may be situated between the bottom portion 212 of the upper plunger member 210 and the top portion 222 of the lower plunger member 220. Whenever the upper plunger member 210 is to be moved upwards, the first 252 and the second 254 protruding portions abut the bottom portion 212 of the upper plunger member 210 and pushes the upper plunger member 210 to a certain axial position in the valve bore 80. To this end, the upper plunger member 210 may comprise a radially extending circumferential portion 213. This to facilitate the first 252 and the second 254 protruding portions of the plunger member mover 250 to safely abut/grip the upper plunger member 210 upon moving the same. At the same time, the plunger movement preventing member 120 prevents the lower plunger member 220 from moving upwards per the above. This situation applies mutatis mutandis in events the lower plunger member 220 is to be moved axially downwards as readily understood by those skilled in the art. The plunger member mover 250 may alternatively comprise further protruding portions for similar purposes rather than the two 252, 254 exemplified above.

The upper plunger member 210 may, on axially opposing sides, have open ends 216, 218. Hence, upon a fluid flowing in the second flow path FP2, i.e., between the first fluid opening 20 and the third fluid opening 60, there is no net flow of fluid through the upper plunger member 210.

The lower plunger member 220 may, on axially opposing sides, have open ends 226, 228. Hence, upon a fluid flowing in the second flow path FP2, there is a net flow of fluid through the lower plunger member 220. Further, upon a fluid flowing in the first flow path FP1, i.e., between the first fluid opening 20 and the second fluid opening 40, there is a net flow of fluid through the lower plunger member 220, but still no net flow of fluid through the upper plunger member 210.

The open ends 216, 218, 226, 228 discussed above may refer to at least partially open ends. Hence, the open ends 216, 218, 226, 228 do not necessarily refer to an area being the full area spanned by an inner circumference of respective plunger member 210, 220. For instance, the open ends 218, 226 of respective plunger member 210, 220 facing each other while disposed in the valve bore 80 may have a smaller cross-sectional area compared to the open ends 216, 228 of respective plunger member 210, 220 facing away from each other. This since the upper plunger member 210 may comprise the radially extending circumferential portion 214, and the lower plunger member 220 may comprise a similar radially extending circumferential portion 224 to facilitate moving respective plunger member 210, 220 by the plunger member mover 250 according to the above.

The term "open end" is thus to be interpreted widely. For instance, an open end of the respective plunger member 210, 220 may comprise a plate having one or more through-going openings. Alternatively, an open end may comprise a plurality of spokes, or other obstacles.

The upper plunger member 210 and the lower plunger member 220 may, respectively, comprise a sleeve 217, 227 being unobstructed. This implies that the plunger members 210, 220 lacks any through-going opening (such as, e.g., a circumferentially through-going opening) through which fluid may possibly flow. Put in mathematical terms, the sleeve 217, 227 may thereby be "simply connected", referring to a sleeve that "lacks through-going holes/openings".

A first merge 81 between the second fluid opening 40 and the valve bore 80 and a second merge 83 between the third fluid opening 60 and the valve bore 80 may be axially separated along the axial extension A1 of the valve bore 80 such that the first merge 81 and the second merge 83 are located on axially opposing sides 82, 84 of the intermediate portion 110 of the valve housing 100. Hence, an axial extension A40 of the second fluid opening 40 and an axial extension A60 of the third fluid opening 60 may be substantially parallel. However, it should be appreciated that the axial extensions A40, A60 may, alternatively, have any adequate angle between each other with a substantially remained function. Such an angle may be in the range of 30-330 degrees, more preferably in the range of 90-270 degrees, and even more preferably in the range of 170-190 degrees (as depicted in the appended drawings). A merge 81, 83 as discussed herein refers to an intersecting region between two spaces through which a fluid may flow. A cross section of a merge 81, 83 hence may set a constraint on a volumetric flow of a specific fluid flowing between the two spaces, given a specific set of system conditions such as fluid flow, temperature, etc. From a construction technical point of view, or fluid flow reasons, the cross section of the merges 81, 83 may be smaller than their respective fluid opening 40, 60 further away from the valve bore 80, as exemplified in the appended drawings.

The first fluid opening 20 may be a fluid inlet, the second fluid opening 40 may be a first fluid outlet, and the third fluid opening 60 may be a second fluid outlet. This may serve as a typical use case in that the valve assembly 1000 functions as a diverting valve according to the above. However, an opposite situation may be possible without modifying any of the structural features of the valve assembly 1000. That is, the first fluid opening 20 may be a fluid outlet, the second fluid opening 40 may be a first fluid inlet, and the third fluid opening 60 may be a second fluid inlet. Thereby, the valve assembly 1000 may be installed as a mixing valve, thus enhancing flexibility of the valve assembly 1000. It is to be understood, however, that the valve assembly 1000 allows a single flow path at a time, regardless of how the valve assembly 1000 is installed in a circuit. Other combinations of fluid inlets and outlets may further be possible.

The upper and lower plunger members 210, 220 may comprise one or more soft sealing elements to prevent unnecessary fluid leakage while in use. By way of example, the upper plunger member 210 may comprise a first soft sealing element 211-1 present in a first circumferential indentation 213-1 of the upper plunger member 210. The first soft sealing element 211-1 may have a circular cross-sectional profile, thus having the form av an O-ring. The upper plunger member 210 may further comprise a second soft sealing element 211-2 present in a second circumferential indentation 213-2 of the upper plunger member 210. The second soft sealing element 213-1 may have a quadrangular cross-sectional profile, hence having the form of a flat ring. Similarly, the lower plunger member 220 may comprise a first soft sealing element 221-1 present in a first circumferential indentation 223-1 of the lower plunger member 220. The first soft sealing element 221-1 may have a circular cross-sectional profile, thus having the form av an O-ring. The lower plunger member 220 may further comprise a second soft sealing element 221-2 present in a second circumferential indentation 223-2 of the lower plunger member 220. The second soft sealing element 221-2 may have a quadrangular cross-sectional profile, hence having the form of a flat ring. To avoid unnecessary cluttering in the drawings, the soft sealing elements 211-1, 211-2, 221-1, 221-2 are equipped with reference numerals in Fig. 1 only. The soft sealing elements 211-1, 211-2, 221-1, 221-2 may be manufactured by any adequate elastic material, such as rubber. Preferably, the rubber may be nitrile rubber, also known as nitrile butadiene rubber (NBR). Alternatively, the rubber may be ethylene propylene diene monomer rubber (EPDM), but other natural or synthetic rubbers such as natural rubber (NR), styrene rubber (SBR), chloroprene rubber (CR), butyl rubber (IIR), silicone rubber (Q) or a mixture thereof, such as a mixture of natural rubber and styrene rubber (NR/SBR) are also possible. This may further apply for other disclosed O rings, flat rings, etc., in this text. It should be appreciated that any disclosed O ring, flat ring, etc., herein may be replaced by any soft sealing element without departing from the scope of the claims. The skilled person readily appreciates that the above soft sealing elements may have any adequate geometry. By way of example, all the above-described soft sealing elements may have the form of a commonly available O ring.

The valve assembly 1000 may further comprise an electronically controlled linear actuator 300, a translator 310 extending along the axial extension A1 of the valve bore 80, wherein the translator 310 is operably connected to the electronically controlled linear actuator 300 and the plunger member mover 250 such that an axial movement of the translator 310 generates a movement of the upper plunger member 210 or the lower plunger member 220. Control of the volumetric flow through the valve assembly 1000 may thus be performed by the electronically controlled linear actuator 300. The electronically controlled linear actuator 300 may be electrically connected to a controller comprising circuitry configured to execute a controlling function for controlling, e.g., a temperature in a device installed in a heating or cooling system.

One or more parts of the valve assembly 1000 may be manufactured by one or more materials/compounds selected from the group consisting of brass, steel, bronze, plastic and/or fiber composite, and iron.

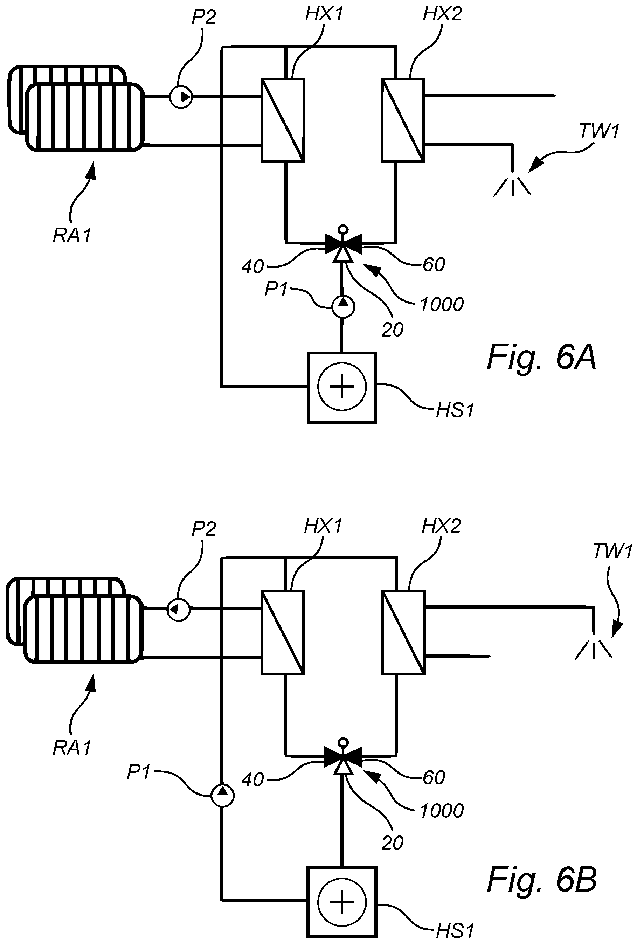

In connection with Figs 6A-B there is shown a first set of example use cases of the valve assembly 1000. Herein, the valve assembly 1000 is installed in a heating/cooling/tap water system or a combination thereof. In Fig. 6A the valve assembly is installed as a diverting valve, allowing one incoming fluid flow and two outgoing fluid flows. In Fig. 6B the valve assembly is installed as a mixing valve, allowing two incoming fluid flows and one outgoing fluid flow. In the first example use case, a radiator RA1 is connected to a first heat exchanger HX1, and a tap water arrangement TW1 is connected to a second heat exchanger HX2. The heating or cooling system considered here further comprises a first fluid pump P1 and a second fluid pump P2. The valve assembly 1000 is connected to both the first heat exchanger HX1 and the second heat exchanger HX2, such that the first fluid outlet 40 of the valve assembly 1000 fluidly connects to the first heat exchanger HX1, and the second fluid outlet 60 fluidly connects to the second heat exchanger HX2. The fluid inlet 20 of the valve assembly 1000 fluidly/hydronically connects to a first heat source HS1. In Fig. 6A fluid flows in piping of the heating or cooling system from the heat source HS1 into the valve assembly 1000, whereafter the fluid is diverted to flow either to the first heat exchanger HX1 or to the second heat exchanger HX2. Hence, a temperature may be controlled in both the first radiator RA1 and in tap water to be tapped in the tap water arrangement TW1 using a single valve assembly 1000. In connection with Fig. 6B there is shown an arrangement similar to the arrangement in Fig. 6A, where the fluid flows in an opposite direction with a remained function. The direction of a fluid flow in the heating or cooling system can be adjusted by changing position(s) of the pump(s) P1, P2 or by connecting the pump(s) P1, P2 in an opposite direction, etc.

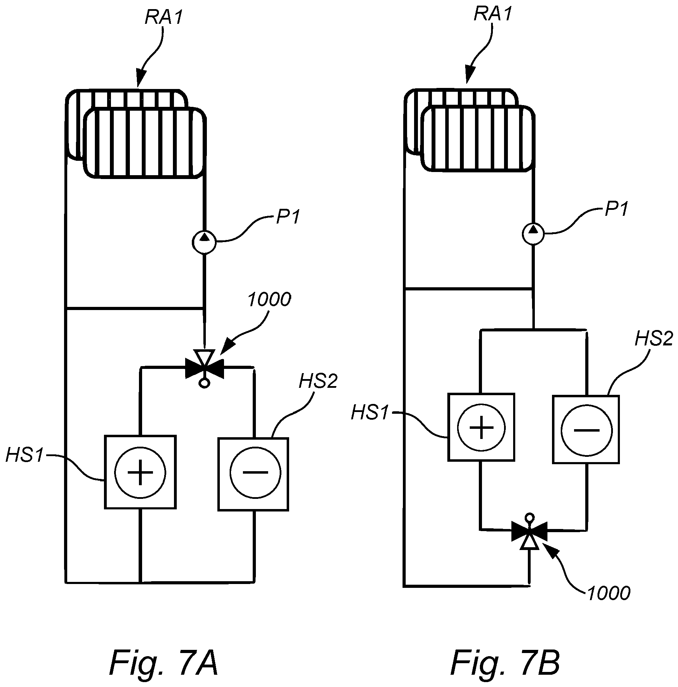

In connection with Figs 7A-B there is shown a second example use case of the valve assembly 1000 in which the valve assembly 1000 is installed in a heating or cooling system. In Fig. 7A the valve assembly 1000 is installed as a mixing valve in that the valve assembly 1000 allows two incoming fluid flows and one outgoing fluid flow. Conversely, in Fig. 7B the valve assembly 1000 is installed to allow one incoming fluid flow and two outgoing fluid flows. Heat supply or heat removal in the first heating or cooling device RA1 may be performed by fluidly/hydronically connecting the valve assembly 1000 with the first heating or cooling device RA1 via the first fluid opening 20 of the valve assembly 1000, wherein the first fluid opening 20 functions as a fluid outlet 20 of the valve assembly 1000. The remaining fluid openings 40, 60 herein function as fluid inlets 40, 60, wherein a first fluid opening 40 functions as a first fluid inlet 40 fluidly connected to the heat source HS1, and wherein the second fluid opening 60 functions as a second fluid inlet 60 fluidly connected to a heat sink HS2. Preferably, the heat source HS1 may provide a first tempered fluid having a temperature above a surrounding temperature. By way of example, the first tempered fluid may have a temperature in the range of 40-60 degrees Celsius. The heat sink HS2 may provide a second tempered fluid having a temperature below the surrounding temperature. By way of example, the second tempered fluid may have a temperature in the range of 5-15 degrees Celsius. Hence, the valve assembly 1000 may transfer heat from two sources separately. In Fig. 7A the valve assembly 1000 is installed on a supply side, whereas, in Fig. 7B, the valve assembly 1000 is installed on a return side.

Accordingly, and in summary, in some embodiments discussed above, there has been described a valve assembly 1000 which may function as a diverting valve. The valve assembly 1000 may thereby allow a fluid to flow in different flow paths separately, such that while one flow path is open for a fluid flow the remaining flow path is completely closed for a fluid flow. Further, a fluid flow in the open flow path can be changed substantially continuously while the remaining flow path is blocked. In addition, fluid is prevented to flow through the valve assembly while the upper 210 and lower 220 plunger members abut the intermediate portion 210 of the valve bore 80.

The person skilled in the art realizes that the present invention by no means is limited to the preferred embodiments described above. On the contrary, many modifications and variations are possible within the scope of the appended claims. Variations to the disclosed embodiments can be understood and effected by the skilled person in practicing the claimed invention, from a study of the drawings, the disclosure, and the appended claims.

## Claims

1. A valve assembly (1000) comprising:
a valve housing (100) comprising:
a first fluid opening (20);
a second fluid opening (40);
a third fluid opening (60);
a valve bore (80) having an axial extension (A1); and
an intermediate portion (110) axially located between the second (40) and the third (60) fluid opening; and
a plunger (200) disposed and axially movable within the valve bore (80), wherein the plunger (200) comprises an upper plunger member (210) and a lower plunger member (220) axially movable independently of each other on a respective axial side of the intermediate portion (110),
wherein the upper (210) and lower (220) plunger members, while contacting the intermediate portion (110), provide for simultaneous prevention of a fluid to flow in a first flow path (FP1) and in a second flow path (FP2), the first flow path (FP1) being a flow path between the first fluid opening (20) and the second fluid opening (40), and the second flow path (FP2) being a flow path between the first fluid opening (20) and the third fluid opening (60).

2. The valve assembly (1000) according to claim 1, further comprising
an upper biasing member (230) for biasing the upper plunger member (210) towards the intermediate portion (110); and
a lower biasing member (240) for biasing the lower plunger member (220) towards the intermediate portion (110).

3. The valve assembly (1000) according to claim 1 or 2, wherein the upper biasing member (230) is an upper spring, and the lower biasing member (240) is a lower spring.

4. The valve assembly (1000) according to any one of claims 1-3, further comprising a plunger movement preventing member (120) arranged at the intermediate portion (110) for preventing at least a portion of the upper plunger member (210) to move below the plunger movement preventing member (120), and for preventing at least a portion of the lower plunger member (220) to move above the plunger movement preventing member (120).

5. The valve assembly (1000) according to any one of claims 1-4, wherein the plunger movement preventing member (120) has an open circumferential geometry temporarily attachable to a complementary indentation (130) of the intermediate portion (110) such that the plunger movement preventing member (120) is radially biased therein.

6. The valve assembly (1000) according to any one of claims 1-5, wherein the upper (210) and lower (220) plunger members are biased towards the plunger movement preventing member (120) while contacting thereto.

7. The valve assembly (1000) according to any one of claims 1-6, further comprising a plunger member mover (250) arranged for axially moving the upper plunger member (210) and the lower plunger member (220).

8. The valve assembly (1000) according to any one of claims 1-7, wherein the upper plunger member (210) and the lower plunger member (220) have, on axially opposing sides, open ends (216, 218, 226, 228).

9. The valve assembly (1000) according to any one of claims 1-8, wherein the upper plunger member (210) and the lower plunger member (220), respectively, comprises a sleeve (217, 227) being unobstructed.

10. The valve assembly (1000) according to any one of claims 1-9, wherein a first merge (81) between the second fluid opening (40) and the valve bore (80) and a second merge (83) between the third fluid opening (60) and the valve bore (80) are axially separated along the axial extension (A1) of the valve bore (80) such that the first merge (81) and the second merge (83) are located on axially opposing sides of the intermediate portion (110) of the valve housing (100).

11. The valve assembly (1000) according to any one of claims 1-10, wherein the first fluid opening (20) is a fluid inlet, the second fluid opening (40) is a first fluid outlet, and the third fluid opening (60) is a second fluid outlet.

12. The valve assembly (1000) according to any one of claims 1-10, wherein the first fluid opening (20) is a fluid outlet, the second fluid opening (40) is a first fluid inlet, and the third fluid opening (60) is a second fluid inlet.

13. The valve assembly (1000) according to any one of claims 1-12, further comprising:
an electronically controlled linear actuator (300); and
a translator (310) extending along the axial extension (A1) of the valve bore (80), wherein the translator (310) is operably connected to the electronically controlled linear actuator (300) and the plunger member mover (250) such that an axial movement of the translator (310) generates a movement of the upper plunger member (210) or the lower plunger member (220).

14. The valve assembly (1000) according to any one of claims 1-13, wherein one or more parts of the valve assembly is manufactured by a durable material being any one of brass, steel, plastic and/or fiber composite, iron, or any compound thereof.

15. Use of a valve assembly (1000) according to any one of claims 1-14 in a heating or cooling system and/or a tap water system.
